(19) Europäisches Patentamt
European Patent Office
Office européen des brevets

(11) Veröffentlichungsnummer: **0 216 205 B1**

(12) **EUROPÄISCHE PATENTSCHRIFT**

(45) Veröffentlichungstag der Patentschrift: **18.12.91**

(51) Int. Cl.5: **C07F 9/53**

(21) Anmeldenummer: **86112091.3**

(22) Anmeldetag: **02.09.86**

(54) **Verfahren zur Herstellung tertiärer Phosphanoxide.**

(30) Priorität: **11.09.85 DE 3532360**

(43) Veröffentlichungstag der Anmeldung:
**01.04.87 Patentblatt 87/14**

(45) Bekanntmachung des Hinweises auf die Patenterteilung:
**18.12.91 Patentblatt 91/51**

(84) Benannte Vertragsstaaten:
**BE CH DE FR GB LI NL**

(56) Entgegenhaltungen:
**DE-A- 3 426 721**

(73) Patentinhaber: **HOECHST AKTIENGESELLSCHAFT**
**Postfach 80 03 20**
**W-6230 Frankfurt am Main 80(DE)**

(72) Erfinder: **Weiss, Erwin, Dr.**
**Vorderheide 1**
**W-6238 Hofheim am Taunus(DE)**

**EP 0 216 205 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Tertiäre Phosphanoxide sind Verbindungen der allgemeinen Formel

$R_3P=O$,

worin R = gleiche oder verschiedene organische Reste.

Sie sind End- und Zwischenprodukte auf verschiedenen Sachgebieten wie z.B. dem Pflanzenschutz- sowie dem Polymeren-Sektor.

Zu ihrer Herstellung ist eine Reihe verschiedener Methoden bekannt. Einige dieser Methoden gehen aus von tertiären Phosphansulfiden, welche durch eine oxidative Behandlung in die entsprechenden Phosphanoxide Überführt werden. Diese Methoden bieten sich vor allem dann an, wenn die jeweiligen tertiären Phosphansulfide leicht zugänglich sind, so daß der Umweg über die Sulfide zu den Phosphanoxiden - verglichen mit anderen Methoden zur Herstellung der Phosphanoxide - der vorteilhaftere Weg ist.

Die oxidative Überführung der tertiären Phosphansulfide in die entsprechenden Phosphanoxide kann z.B. mittels $SOCl_2$, mittels $KMnO_4$ oder auch mittels $HNO_3$ erfolgen; vgl. den Artikel von L. Maier "Organische Phosphorverbindungen" in Helvetica Chimica Acta 47, S. 120 - 132, insbesondere S. 124/125 (1964). In dieser Literaturstelle sind für die Oxidation mit den 3 genannten Reagentien folgende Reaktionsgleichungen angegeben:

$$(ClC_6H_4)_3PS + SOCl_2 \rightarrow (ClC_6H_4)_3PO + S_2Cl_2$$

$$(CH_3C_6H_4)_3PS + KMnO_4 \xrightarrow{\text{Pyridin}} (HOOCC_6H_4)_3PO$$

$$(C_6H_5)_3PS + HNO_3 \text{ konz.} \rightarrow (m\text{-}O_2NC_6H_4)_3PO$$

Für die Methode mit Thionylchlorid $SOCl_2$ ist die stark korrosive Wirkung dieses Reagenzes sowie die Bildung des stark geruchsbelästigenden Dischwefeldichlorids $S_2Cl_2$ bei dieser Reaktion nachteilig.

Die Oxidation mit $KMnO_4$ in Pyridin liefert durchweg nur mäßige Ausbeuten an Phosphanoxid und verläuft - wie aus der vorstehenden Reaktionsgleichung ersichtlich - im Falle des Einsatzes von Kern-alkylierten aromatischen Phosphansulfiden unter Oxidation der am aromatischen Kern sitzenden Alkylgruppe zur Carboxylgruppe.

Bei der Umsetzung mit konzentrierter Salpetersäure findet außer der Phosphanoxid-Bildung gleichzeitig eine Nitrierung der vorhandenen aromatischen Kerne statt.

Eine günstigere Methode der Oxidation von tertiären Phosphansulfiden in die entsprechenden Phosphanoxide ist die von A.M. Aguiar et al. in J. Org. Chem. 34, S. 3349 bis 3352, insbesondere S.3351 rechte Spalte, letzter Absatz (1969) offenbarte Wasserstoffperoxid-Methode. Die Methode wurde anhand der Oxidation des Dimethyl-1-butinylphosphansulfids mit einem etwa 75 %igen Überschuß an $H_2O_2$ in Methanol beschrieben:

$$(CH_3)_2\overset{S}{\overset{\|}{P}}-C\equiv C-C_2H_5 + H_2O_2 \xrightarrow{\text{in } CH_3OH} (CH_3)_2\overset{O}{\overset{\|}{P}}-C\equiv C-C_2H_5 + H_2O + S$$

Nach 2-tätigem Stehen des Ansatzes und entsprechender Aufarbeitung soll die Ausbeute an Dimethyl-1-butinylphosphanoxid 61 % betragen haben. Wegen der langen Reaktionszeit, der nur mäßigen Ausbeute sowie auch der Notwenigkeit der Aufarbeitung des im Überschuß eingesetzten Wasserstoffperoxids ist auch diese Methode nicht befriedigend.

Die Methode wurde verbessert durch das in der Patentanmeldung EP-A- 170 101 vorgeshlagene Verfahren zur Herstellung tertiärer Phosphanoxide durch eine oxidative Behandlung von tertiären Phosphansulfiden mit $H_2O_2$ in einem Lösungsmittel;
das Verfahren ist dadurch gekennzeichnet, daß man ein Lösungsmittel verwendet, welches zu mindestens etwa 20 Gew.-%, vorzugsweise zu mindestens etwa 50 Gew.-%, aus - gegebenenfalls halogenierten - niederen aliphatischen Carbonsäuren und/oder deren Anhydriden

und zum Rest aus damit mischbaren anderen inerten Lösungsmitteln besteht. Hierbei ist es besonders bevorzugt, als Lösungsmittel nur - gegebenenfalls halogenierte - aliphatische $C_1$-$C_6$-Carbonsäuren und/oder deren Anhydride, insbesondere nur Essigsäure, zu verwenden.

Das Verfahren verläuft in kurzen Reaktionszeiten ohne die Bildung von störenden Nebenprodukten mit quantitativen oder nahezu quantitativen Ausbeuten an den jeweiligen Phosphanoxiden; nicht immer fällt jedoch hier der bei der Reaktion gebildete elementare Schwefel in ausreichend gut durch Filtrieren abtrennbarer Form an.

In dem Bestreben, dieses Verfahren so zu verbessern, bzw. abzuändern, daß der bei der Reaktion gebildete elementare Schwefel in noch besser filtrierbarer Form anfällt, wurde nun gefunden, daß sich dieses Ziel durch Verwendung eines Lösungsmittels erreichen läßt, welches zu etwa 2 bis 20 Gew.-% aus - gegebenenfalls halogenierten - niederen aliphatischen Carbonsäuren und zum Rest aus 1- oder mehrwertigen aliphatischen oder cycloaliphatischen Alkoholen - gegebenenfalls im Gemisch mit anderen inerten Lösungsmitteln, welche mit der Carbonsäure/Alkohol-Mischung mischbar sind - besteht.

Erfindungsgegenstand ist daher ein Verfahren zur Herstellung tertiärer Phosphanoxide durch eine oxidative Behandlung von tertiären Phosphansulfiden mit Wasserstoffperoxid in einem Lösungsmittel;
das Verfahren ist dadurch gekennzeichnet, daß man ein Lösungsmittel verwendet, welches zu etwa 2 bis weniger als etwa 20 Gew.-%, vorzugsweise zu etwa 10 bis weniger als etwa 20 Gew.-%, aus - gegebenenfalls halogenierten - niederen aliphatischen Carbonsäuren und zum Rest aus ein- oder mehrwertigen aliphatischen oder cycloaliphatischen Alkoholen - gegebenenfalls im Gemisch mit anderen inerten Lösungsmitteln, welche mit der Carbonsäure/Alkohol-Mischung mischbar sind - besteht.

Das Verfahren verläuft - ebenso wie dasjenige gemäß der vorerwähnten Patentanmeldung - ohne die Bildung von störenden Nebenprodukten mit quantitativen oder nahezu quantitativen Ausbeuten an den jeweiligen Phosphanoxiden. Die Reaktionszeiten sind zwar nicht immer so kurz wie diejenigen nach dem Verfahren gemäß der vorerwähnten Patentanmeldung; sie sind jedoch immer noch kürzer als die Reaktionszeit bei dem Verfahren von A.M. Aguiar et al., a.a.O. Der bei der Reaktion gebildete Schwefel fällt jetzt in sehr gut filtrierbarer feinkristalliner Form an.

Im Hinblick auf die längere Reaktionszeit und die nur mäßige Ausbeute bei der Oxidation mit $H_2O_2$ in Methanol gemäß A.M. Agiar et al., a.a.O., sowie im Hinblick auf den nicht immer in ausreichend gut filtrierbarer Form anfallenden Reaktionsschwefel gemäß dem Verfahren der vorerwähnten Patentanmeldung war dieses Ergebnis durchaus unerwartet und Überraschend.

Als gegebenenfalls halogensubstituierte niedere aliphatische Carbonsäuren kommen vorzugsweise aliphatische $C_1$-$C_6$-Carbonsäuren in Frage, die noch durch ein oder mehrere Halogenatome, vorzugsweise F und/oder Cl, substituiert sein können. Beispielhafte solche Carbonsäuren sind:
Ameisensäure
Essigsäure
Propionsäure
Monochloressigsäure
Monofluoressigsäure
Trifluoressigsäure etc.

Die Carbonsäuren können sowohl einzeln als auch in Mischung miteinander verwendet werden. Sie sollen etwa 2- 20 Gew.-%, vorzugsweise etwa 10 - 20 Gew.-% des Gesamtlösungsmittels ausmachen. Besonders bevorzugte Carbonsäure ist Essigsäure (Eisessig).

Der Rest des Lösungsmittels besteht aus ein- oder mehrwertigen aliphatischen oder cycloaliphatischen Alkoholen, gegebenenfalls im Gemisch mit anderen inerten Lösungsmitteln, welche mit der Carbonsäure/Alkohol-Mischung mischbar sind.

Als ein- oder mehrwertige aliphatische oder cycloaliphatische Alkohole sind 1- und 2-wertige Alkohole mit 1 bis 8 C-Atomen, die gegebenenfalls noch durch inerte Gruppen substituiert sein können, bevorzugt. Beispielhafte solche Alkohole sind:
Methanol
Ethanol
n-Propanol
i-Propanol
n-Butanol
i-Butanol
tert.-Butanol
2-Chlorethanol
Ethylenglykol
Ethylenglykolmonomethylether

Cyclohexanol etc.

Die Alkohole können alleine oder in Mischung miteinander verwendet werden. Besonders bevorzugte Alkohole sind Methanol und/oder Ethanol.

Die Alkohole können - zusammen mit den vorerwähnten Carbonsäuren - das Gesamtlösungsmittel bilden; sie können aber auch zusammen mit anderen inerten Lösungsmitteln eingesetzt werden. In letzterem Fall ist es bevorzugt, daß der Alkoholanteil überwiegt.

Die anderen inerten Lösungsmittel sollen mit der Carbonsäure/Alkohol-Mischung mischbar sein; sie dürfen natürlich mit dem Wasserstoffperoxid sowie den Ausgangs- und Endprodukten der Reaktion nicht in unerwünschter Weise reagieren. In Frage kommende derartige inerte Lösungsmittel sind vorzugsweise niedere aliphatische, cycloaliphatische und/oder aromatische Kohlenwasserstoffe und/oder Chlorkohlenwasserstoffe (Hexan, Cyclohexan, Toluol, Xylol, 1,2-Dichlorethan, Chlorbenzol, Fluorbenzol etc.).

Als tertiäre Phosphansulfide können für das Verfahren im Prinzip alle möglichen unter diese Bezeichnung fallenden Verbindungen eingesetzt werden. Bevorzugt ist der Einsatz von Phosphansulfiden der Formel

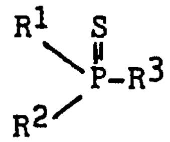

worin

$R^1$, $R^2$ und $R^3$ = unabhängig voneinander gegebenenfalls durch inerte Gruppen substituierte $C_1$-$C_{12}$-Alkyl-$C_6$-$C_{10}$-Aryl- und $C_6$-$C_{20}$-Aralkylgruppen

Wenn die Alkyl-, Aryl- und Aralkyl-Gruppen durch inerte Gruppen substituierte sind, sind die Substituenten vorzugsweise Halogenatome, insbesondere nur F- und/oder Cl-Atome. Bevorzugte inerte Substituenten für die Aryl- und Aralkylgruppen sind auch Alkylreste (vorzugsweise mit bis zu 4 C-Atomen).

Beispielhafte tertiäre Phosphansulfide sind: Triphenylphosphansulfid
Diphenyl-methyl-phosphansulfid
Dimethyl-phenyl-phosphansulfid
Tris-(4-fluorphenyl)-phosphansulfid
Bis-(4-fluorphenyl)-(2-fluorphenyl)-phosphansulfid
Bis-(4-fluorphenyl)-phenyl-phosphansulfid
(4-Fluorphenyl)-(2-fluorphenyl)-phenyl-phosphansulfid
Diphenyl-(4-fluorphenyl)-phosphansulfid
Diphenyl-(2-fluorphenyl)-phosphansulfid
Bis-(4-fluorphenyl)-methyl-phosphansulfid
(4-Fluorphenyl)-(2-fluorphenyl)-methyl-phosphansulfid
Dimethyl-(4-fluorphenyl)-phosphansulfid
Bis-(4-fluorphenyl)-(4-methylphenyl)-phosphansulfid
Bis-(4-fluorphenyl)-(2-methylphenyl)-phosphansulfid
(4-Fluorphenyl)-(2-fluorphenyl)-(4-methylphenyl)-phosphansulfid
Bis-(4-methylphenyl)-(4-fluorphenyl)-phosphansulfid
(4-Fluorphenyl)-(4-methylphenyl)-(2-methylphenyl)-phosphansulfid
Tris-(4-chlorphenyl)-phosphansulfid
Bis-(4-chlorphenyl)-(2-chlorphenyl)-phosphansulfid
Bis-(4-chlorphenyl)-phenyl-phosphansulfid
(4-Chlorphenyl)-(2-chlorphenyl)-phenyl-phosphansulfid
Diphenyl-(4-chlorphenyl)-phosphansulfid
Bis-(4-chlorphenyl)-methyl-phosphansulfid
(4-Chlorphenyl)-(2-chlorphenyl)-methyl-phosphansulfid
Dimethyl-(4-chlorphenyl)-phosphansulfid
(4-Chlorphenyl)-methyl-phenyl-phosphansulfid
(4-Fluorphenyl)-(4-chlorphenyl)-phenyl-phosphansulfid
(4-Fluorphenyl)-(4-chlorphenyl)-methyl-phosphansulfid
(4-Fluorphenyl)-methyl-phenyl-phosphansulfid
Tris-(4-methylphenyl)-phosphansulfid

Bis-(4-methylphenyl)-(2-methylphenyl)-phosphansulfid
Bis-(4-methylphenyl)-(3-methylphenyl)-phosphansulfid
Bis-(4-methylphenyl)-phenyl-phosphansulfid
(4-Methylphenyl)-(2-methylphenyl)-phenyl-phosphansulfid
(4-Methylphenyl)-(3-methylphenyl)-phenyl-phosphansulfid
Diphenyl-(4-methylphenyl)-phosphansulfid
Diphenyl-(3-methylphenyl)-phosphansulfid
Diphenyl-(2-methylphenyl)-phosphansulfid
Bis-(4-methylphenyl)-methyl-phosphansulfid
(4-Methylphenyl)-(2-methylphenyl)-methyl-phosphansulfid
(4-Methylphenyl)-(3-methylphenyl)-methyl-phosphansulfid
Dimethyl-(4-methylphenyl)-phosphansulfid
Dimethyl-(2-methylphenyl)-phosphansulfid
Dimethyl-(3-methylphenyl)-phosphansulfid

Wasserstoffperoxid kann als etwa 3 bis 85 %ige wässerige Lösung eingesetzt werden, zweckmäßig in der handelsüblichen Form (etwa 30 bis 35 %ig). Vorzugsweise wird das Wasserstoffperoxid in etwa äquimolarer Menge, bezogen auf das Ausgangs-Phosphansulfid, verwendet. Ein geringer Überschuß von etwa 5 - 40 % ist vorteilhaft; weitere Überschüsse sind möglich, aber gegebenenfalls nur dann noch von Vorteil, wenn mit hohen Anteilen an Alkoholen im Lösungsmittelgemisch gearbeitet wird.

Die Phosphansulfide werden in dem Lösungsmittel gelöst oder suspendiert. Das Verhältnis von Phosphansulfid:
Lösungsmittel kann in weiten Grenzen variieren. Vorteilhaft ist ein Gewichtsverhältnis von ca. 1:(1-20). In der Lösung oder Suspension wird bei Temperaturen von im allgemeinen zwischen etwa -5 und +100 °C, vorzugsweise zwischen etwa +40 und +80 °C, Wasserstoffperoxid als wässerige Lösung zudosiert. Da die Reaktion exotherm verläuft, ist gegebenenfalls Kühlung erforderlich. Entsprechend müssen kalte Lösungen oder Suspensionen von Phosphansulfiden nicht vorgeheizt werden, um die gewünschte Reaktionstemperatur zu erreichen; es ist vielmehr möglich, die Reaktionswärme selbst zu nutzen, um die gewünschte Temperatur zu erzielen.

Die Aufarbeitung des Reaktionsgemisches erfolgt in an sich bekannter Weise durch Filtration oder Absaugen der abgekühlten Lösung von dem hier in elementarer feinkristalliner Form anfallenden Schwefel.

Besonders günstig wirkt sich hier die sehr geringe Löslichkeit des elementaren Schwefels in den erfindungsgemäß verwendeten Lösungsmittelgemischen sowie auch die gute Löslichkeit von tertiären Phosphanoxiden in eben diesen Gemischen, auch in Gegenwart des durch die Reaktionsführung unvermeidlichen Wasseranfalls aus. Dies trifft insbesondere für Lösungsmittelgemische aus Essigsäure und Methanol zu.

Nach Abdestillieren des Lösungsmittels (vorzugsweise im Vakuum) bleiben die Phosphanoxide meist zunächst als ölige Carbonsäureaddukte zurück. Die freien Phosphanoxide können leicht in reiner Form durch Erhitzen im Vakuum oder Destillation erhalten werden. Ebenso ist es möglich, die Carbonsäureaddukte in Wasser aufzurühren und gegebenenfalls durch Neutralisation mit Basen zu spalten. Die freien Phosphanoxide fallen aus der wässerigen, gegebenenfalls alkalischen Lösung aus und können abfiltriert oder sofern flüssig - gegebenenfalls nach Zusatz eines nicht mit Wasser mischbaren Lösungsmittels - abgetrennt werden.

Wegen der einfachen Durchführbarkeit der Reaktion, der relativ kurzen Reaktionszeiten, der unproblematischen Aufarbeitung, der Umweltfreundlichkeit (als Nebenprodukte entstehen nur Schwefel und Wasser) und der hohen Phosphanoxid-Ausbeuten stellt das Verfahren einen erheblichen Fortschritt auf diesem Gebiet dar.

Die nachfolgenden Beispiele sollen der näheren Erläuterung der Erfindung dienen.

<u>Beispiel 1</u>

717 g eines Gemisches aus 0,10 Mol Diphenyl-4-chlorphenyl-phosphansulfid
0,06 Mol (3-Chlorbenzyl)-(4-chlorphenyl)-phenyl-phosphansulfid
0,10 Mol (2-Chlorphenyl)-(4-chlorphenyl)-phenyl-phosphansulfid
1,50 Mol Bis-(4-chlorphenyl)-phenyl-phosphansulfid
0,09 Mol Tris-(4-chlorphenyl)-phenyl-phosphansulfid und insgesamt weiteren
0,05 Mol nicht im einzelnen identifizierte P=S-Verbindungen
wurden in 1350 ml (= 1.070 g) Methanol/150 ml (= 157 g) Eisessig suspendiert und innerhalb 8 Stunden bei 50 °C insgesamt 230 g 35 %iges Wasserstoffperoxid (2,68 Mol = 41 % Überschuß bezüglich der

eingesetzten Phosphor-Komponenten) zugetropft. Nachdem keine P=S-Verbindungen mehr nachweisbar waren, wurden mit 10 g Natriumsulfit eventuell vorhandene Peroxide zerstört, abgekühlt und Schwefel abfiltriert (Dauer der Filtration: 6 Min.).

Nach Abdestillieren des Lösungsmittels wurde mit Natronlauge, dann 2 x mit Wasser gewaschen und das Produkt bei 0,1 mbar bis zu einer Sumpftemperatur von 260 °C destilliert. Es wurden
630 g eines Produktes mit folgender Zusammensetzung erhalten:
5,51 % Diphenyl-(4-chlorphenyl)-phosphanoxid
3,25 % (3-Chlorphenyl)-(4-chlorphenyl)-phenyl-phosphanoxid
5,52 % (2-Chlorphenyl)-(4-chlorphenyl)-phenyl-phosphanoxid
78,84 % Bis-(4-chlorphenyl)-phenyl-phosphanoxid
4,78 % Tris-(4-chlorphenyl)-phosphanoxid.

Dies entspricht einer Ausbeute von 96,2 % d.Th.

Beispiel 2

25 g (0,136 Mol) Ethyl-methyl-phenyl-phosphansulfid wurden in
50 g Methanol und
6,3 g Eisessig gelöst und bei 45 - 50 °C
11,69 ml (13,21 g = 0,136 Mol) 35 %iges Wasserstoffperoxid zugetropft. Nach dem Abkühlen wurde filtriert und das Filtrat destilliert. Es wurden
20,59 g (0,122 Mol) Ethyl-methyl-phenyl-phosphanoxid von Kp 0,4 mbar 125 °C und Fp: 48 °C erhalten.

Ausbeute: 90 % d.Th.

**Patentansprüche**

1. Verfahren zur Herstellung tertiärer Phosphanoxide durch eine oxidative Behandlung von tertiären Phosphansulfiden mit Wasserstoffperoxid in einem Lösungsmittel, dadurch gekennzeichnet, daß man ein Lösungsmittel verwendet, welches zu etwa 2 bis weniger als etwa 20 Gew.-%, vorzugsweise zu etwa 10 bis weniger als etwa 20 Gew.-%, aus - gegebenenfalls halogenierten - niederen aliphatischen Carbonsäuren und zum Rest aus 1- oder mehrwertigen aliphatischen oder cycloaliphatischen Alkoholen - gegebenenfalls im Gemisch mit anderen inerten Lösungsmitteln, welche mit der Carbonsäure/Alkohol-Mischung mischbar sind - besteht.

2. Verfahren nach Anspruch 1, dadurch gekennzeichnet, daß man als - gegebenenfalls halogenierte - niedere aliphatische Carbonsäuren solche mit 1 - 6 C-Atomen, insbesondere nur Essigsäure, verwendet.

3. Verfahren nach einem oder mehreren der Ansprüche 1 bis 2, dadurch gekennzeichnet, daß man als 1- oder mehrwertige aliphatische oder cycloaliphatische Alkohole 1- oder 2-wertige Alkohole mit 1 - 8 C-Atomen, insbesondere nur Methanol und/oder Ethanol, verwendet.

4. Verfahren nach einem oder mehreren der Ansprüche 1 - 3, dadurch gekennzeichnet, daß man als andere inerte Lösungsmittel, welche mit der Carbonsäure/Alkohol-Mischung mischbar sind, aliphatische, cycloaliphatische und/oder aromatische Kohlenwasserstoffe und/oder Chlorkohlenwasserstoffe verwendet.

5. Verfahren nach einem oder mehreren der Ansprüche 1 bis 4, dadurch gekennzeichnet, daß man als tertiäre Phosphansulfide Verbindungen der Formel

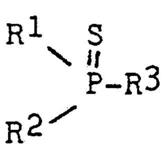

worin

$R^1$, $R^2$ und $R^3$ = unabhängig voneinander gegebenenfalls durch inerte Gruppen substituierte $C_1$-$C_{12}$-Alkyl-$C_6$-$C_{10}$-Aryl-$C_6$-$C_{20}$-Aralkylgruppen

verwendet.

6. Verfahren nach einem oder mehreren der Ansprüche 1 bis 5, dadurch gekennzeichnet, daß man das Wasserstoffperoxid in etwa äquimolarer Menge oder auch in geringem Überschuß, bezogen auf das Ausgangs-Phosphansulfid, einsetzt.

7. Verfahren nach einem oder mehreren der Ansprüche 1 bis 6, dadurch gekennzeichnet, daß man die oxidative Behandlung bei Temperaturen zwischen etwa -5 und +100 °C, vorzugsweise zwischen etwa +40 und +80 °C, durchführt.

## Claims

1. A process for the preparation of tertiary phosphine oxides by oxidative treatment of tertiary phosphine sulfides using hydrogen peroxide in a solvent, which comprises using a solvent which contains from about 2 to less than about 20% by weight, preferably about 10 to less than about 20% by weight, of - optionally halogenated - lower aliphatic carboxylic acids, and the remainder of mono- or polyhydric aliphatic or cycloaliphatic alcohols - if appropriate in mixtures with other inert solvents which are miscible with the carboxylic acid/alcohol mixture.

2. The process as claimed in claim 1, wherein carboxylic acids having 1-6 carbon atoms, particularly only acetic acid, are used as - optionally halogenated - lower aliphatic carboxylic acids.

3. The process as claimed in one or more of claims 1 to 2, wherein mono- or dihydric alcohols having 1-8 carbon atoms, particularly only methanol and/or ethanol, are used as mono- or polyhydric aliphatic or cycloaliphatic alcohols.

4. The process as claimed in one or more of claims 1 to 3, wherein aliphatic, cycloaliphatic and/or aromatic hydrocarbons and/or chlorohydrocarbons are used as the other inert solvents which are miscible with the carboxylic acid/alcohol mixture.

5. The process as claimed in one or more of claims 1 to 4, wherein compounds of the formula

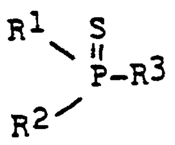

in which

$R^1$, $R^2$ and $R^3$ = independently of one another, $C_1$-$C_{12}$-alkyl, or $C_6$-$C_{10}$-aryl $C_6$-$C_{20}$-aralkyl groups which are optionally substituted by inert groups, are used as tertiary phosphine sulfides.

6. The process as claimed in one or more of claims 1 to 5, wherein the hydrogen peroxide is employed in approximately equimolar amounts or alternatively in a slight excess, relative to the starting phosphine sulfide.

7. The process as claimed in one or more of claims 1 to 6, wherein the oxidative treatment is carried out at temperatures between about -5 and +100 °C, preferably between about +40 and +80 °C.

## Revendications

1. Procédé pour préparer des oxydes de phosphanes tertiaires par un traitement oxydant de sulfures de phosphanes tertiaires au moyen de peroxyde d'hydrogène dans un solvant, procédé caractérisé en ce qu'on utilise un solvant qui est constitué, pour environ 2 à moins d'environ 20 % en poids, de

préférence pour environ 10 à moins d'environ 20 % en poids, d'acides carboxyliques aliphatiques inférieurs, éventuellement halogénés, et, pour le reste, d'alcools aliphatiques ou cycloaliphatiques univalents ou multivalents, éventuellement en mélange avec d'autres solvants inertes qui sont miscibles avec le mélange acide carboxylique/alcool.

2. Procédé selon la revendication 1 caractérisé en ce qu'on utilise, comme acides carboxyliques aliphatiques inférieurs, éventuellement halogénés, des acides de ce genre qui contiennent de 1 à 6 atomes de carbone, en particulier uniquement de l'acide acétique.

3. Procédé selon l'une des revendications 1 et 2, caractérisé en ce qu'on utilise, comme alcools aliphatiques ou cycloaliphatiques univalents ou multivalents, des alcools univalents ou divalents contenant de 1 à 8 atomes de carbone, en particulier uniquement du méthanol et/ou de l'éthanol.

4. Procédé selon l'une quelconque des revendications 1 à 3, caractérisé en ce qu'on utilise, comme autres solvants inertes qui sont miscibles avec le mélange acide carboxylique/alcool, des hydrocarbures aliphatiques, cycloaliphatiques et/ou aromatiques et/ou des hydrocarbures chlorés.

5. Procédé selon l'une quelconque des revendications 1 à 4, caractérisé en ce qu'on utilise, comme sulfures de phosphanes tertiaires, des composés répondant à la formule :

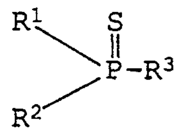

dans laquelle $R^1$, $R^2$ et $R^3$ représentent chacun, indépendamment l'un de l'autre, un alkyle en $C_1$-$C_{12}$, un aryle en $C_6$-$C_{10}$ ou un aralkyle en $C_6$-$C_{20}$, chacun de ces radicaux pouvant en outre porter des substituants inertes.

6. Procédé selon l'une quelconque des revendications 1 à 5, caractérisé en ce que le peroxyde d'hydrogène est mis en jeu en une quantité à peu près égale à la quantité équimolaire ou en un léger excès par rapport au sulfure de phosphane de départ.

7. Procédé selon l'une quelconque des revendications 1 à 6, caractérisé en ce que le traitement oxydant est exécuté à des températures comprises entre environ -5 et +100 °C, de préférence entre environ +40 et +80 °C.